(19) Europäisches Patentamt
European Patent Office
Office européen des brevets

(11) **EP 3 954 568 B1**

(12) **EUROPEAN PATENT SPECIFICATION**

(45) Date of publication and mention
of the grant of the patent:
**05.07.2023 Bulletin 2023/27**

(21) Application number: **21203851.7**

(22) Date of filing: **21.10.2021**

(51) International Patent Classification (IPC):
**B60K 37/06** (2006.01)

(52) Cooperative Patent Classification (CPC):
**B60K 37/06; B60K 35/00;** B60K 2370/152;
B60K 2370/1876; B60K 2370/33; B60K 2370/349;
B60K 2370/37; B60K 2370/52

(54) **SCREEN CONTROL METHOD, SCREEN CONTROL APPARATUS, IN-VEHICLE SCREEN AND VEHICLE**

BILDSCHIRMSTEUERUNGSVERFAHREN, BILDSCHIRMSTEUERUNGSVORRICHTUNG, FAHRZEUGBILDSCHIRM UND FAHRZEUG

PROCÉDÉ DE COMMANDE D'ÉCRAN, APPAREIL DE COMMANDE D'ÉCRAN, ÉCRAN EMBARQUÉ ET VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.02.2021 CN 202110194445**

(43) Date of publication of application:
**16.02.2022 Bulletin 2022/07**

(73) Proprietors:
• **Guangzhou Chengxing Zhidong Motors Technology Co., Ltd.**
**Guangzhou, Guangdong 510000 (CN)**
• **Guangzhou Xiaopeng Motors Technology Co., Ltd.**
**Guangzhou, Guangdong 510000 (CN)**

(72) Inventor: **GAO, Ziqiang**
**Guangzhou (CN)**

(74) Representative: **Ran, Handong**
**Maucher Jenkins**
**Seventh Floor Offices**
**Artillery House**
**11-19 Artillery Row**
**London SW1P 1RT (GB)**

(56) References cited:
**DE-A1-102018 000 151     US-A1- 2017 349 098**
**US-B2- 8 908 039**

## Description

## TECHNICAL FIELD

The present invention relates to the technical field of vehicles, and in particular to a screen control method, a screen control apparatus, an in-vehicle screen and a vehicle.

## BACKGROUND

With the development and popularity of smart cars, in-vehicle screens play an increasing important role in application scenarios. The size and number of in-vehicle screens are increasing. More and more vehicles are equipped with front passenger display screens. However, an illuminated front passenger display screen usually renders a mirror image on a passenger-side window. The mirror image, especially in the dark, will seriously affect the driver's view of a passenger-side rearview mirror, thus affecting driving safety. Therefore, how to better address the influence of the front passenger display screen on the driver is an urgent issue to be resolved. US2017349098A1 relates generally to a vehicle display device including a transparent flexible display which can be unrolled. US8908039B2 relates generally to an interior rearview mirror assembly having a video display screen. DE102018000151A1 relates generally to a cooling device for a display device of a vehicle.

## SUMMARY

Aspects of the invention are set out in the claims. In view of the above problems, embodiments of the present application provide a screen control method, a screen control apparatus, an in-vehicle screen and a vehicle to solve the above technical problems.

The embodiments of the present application are realized with the following technical solutions.

In a first aspect, some embodiments of the present application provide a screen control method for a vehicle. The method includes: acquiring an illumination intensity inside the vehicle; determining whether illumination behind the vehicle is sufficient within a preset time period when the illumination intensity is lower than a threshold illumination intensity; and reducing influence of a front passenger display screen of the vehicle on a driver's view of a passenger-side rearview mirror if illumination behind the vehicle is insufficient

In a second aspect, some embodiments of the present application provide a screen control method for a vehicle. The method includes: acquiring an illumination intensity inside the vehicle; determining whether illumination behind the vehicle is sufficient within a preset time period when the illumination intensity is lower than a threshold illumination intensity; and reducing a display area of a front passenger display screen of the vehicle if illumination behind the vehicle is insufficient to obtain a target display area not overlapping with a light pollution area, wherein light from the light pollution area renders a mirror image on a passenger-side window when the light pollution area is illuminated, and the mirror image obscures the driver's sight to observe a passenger-side rearview mirror.

In a third aspect, some embodiments of the present application provide a screen control method for a vehicle. The method includes: acquiring an illumination intensity inside the vehicle; determining whether illumination behind the vehicle is sufficient within a preset time period when the illumination intensity is lower than a threshold illumination intensity; and displaying images captured by a rear camera on a central control display screen if illumination behind the vehicle is insufficient.

In a fourth aspect, some embodiments of the present application further provide a screen control apparatus for a vehicle, which includes a first acquisition module, a first determination module and a first light pollution protection module. The first acquisition module is configured to acquire an illumination intensity inside the vehicle. The first determination module is configured to determine whether illumination behind the vehicle is sufficient within a preset time period when the illumination intensity is less than a threshold illumination intensity. The first light pollution protection module is configured to reduce influence of a front passenger display screen of the vehicle on a driver's view of a passenger-side rearview mirror if illumination behind the vehicle is insufficient.

In a fifth aspect, some embodiments of the present application further provide a screen control apparatus for a vehicle, which includes a first acquisition module, a first determination module and a first light pollution protection module. The first acquisition module is configured to acquire an illumination intensity inside the vehicle. The first determination module is configured to determine whether illumination behind the vehicle is sufficient within a preset time period when the illumination intensity is lower than a threshold illumination intensity. The first light pollution protection module is configured to reduce a display area of the front passenger display screen of the vehicle if illumination behind the vehicle is insufficient to obtain a target display area not overlapping with a light pollution area, where light from the light pollution area renders a mirror image on a passenger-side window when the light pollution area is illuminated, and the mirror image obscures the driver's sight to observe a passenger-side rearview mirror.

In a sixth aspect, some embodiments of the present application further provide a screen control apparatus for a vehicle, which includes a first acquisition module, a first determination module and a first light pollution protection module. The first acquisition module is configured to acquire an illumination intensity inside the vehicle. The first determination module is configured to determine whether illumination behind the vehicle is sufficient within a preset time period when the illumination intensity is lower than a threshold illumination intensity. The first light pollution protection module is configured to display images captured by a rear camera on a central control display screen if illumination behind the vehicle is insufficient.

In a seventh aspect, some embodiments of the present application further provide an in-vehicle screen including a processor and memory, wherein the memory having stored thereon computer program instructions which, when executed by the processor, result in performance of the screen control method described above.

In an eighth aspect, an embodiment of the present application further provides a computer-readable storage medium comprising computer program instructions stored thereupon which, when executed by a processor, result in performance of the screen control method described above.

According to the screen control method, the screen control apparatus, the in-vehicle screen and the vehicle provided by the embodiments of the present application, the influence of the front passenger display screen on the driver is reduced by detecting illumination in the vehicle and illumination behind the vehicle. Specifically, an illumination intensity inside the vehicle is acquired, followed by judging whether the illumination intensity is lower than a threshold illumination intensity, determining whether illumination behind the vehicle is sufficient within a preset time period if the illumination intensity is lower than the threshold illumination intensity, and reducing the influence of the front passenger display screen of the vehicle on the driver's view of the passenger-side rearview mirror if illumination behind the vehicle is insufficient. According to the present application, the influence of the front passenger display screen on the driver may be reduced to some extent by combining the illumination intensity inside the vehicle and illumination behind the vehicle, so as to improve the user experience while ensuring the driving safety of the driver.

These or other aspects of the present application will become clearer and easier to understand in the following description of the embodiments.

**BRIEF DESCRIPTION OF THE DRAWINGS**

In order to explain the technical solutions in the embodiments of the present invention more clearly, the drawings used in the description of the embodiments will be briefly introduced below. Obviously, the drawings in the following description are just some embodiments of the present invention. For those of ordinary skills in the art, other drawings can be obtained based on these drawings without creative efforts.

FIG. 1 is a schematic flowchart of a screen control method provided by an embodiment of the present application.

FIG. 2 is a schematic flowchart of a screen control method provided by another embodiment of the present application.

FIG. 3 is a schematic flowchart of a screen control method provided by another embodiment of the present application.

FIG. 4 is a schematic diagram showing the relationship among an original display area for the passenger, a light pollution area and a target display area according to a screen control method provided by another embodiment of the present application.

FIG. 5 is a schematic flowchart of Step S330 in a screen control method provided by another embodiment of the present application.

FIG. 6 is a schematic flowchart of a screen control method provided by another embodiment of the present application.

FIG. 7 is a schematic flowchart of Step S420 in a screen control method provided by another embodiment of the present application.

FIG. 8 is a modular block diagram of a screen control apparatus provided by an embodiment of the present application.

FIG. 9 is a modular block diagram of a screen control apparatus provided by an embodiment of the present application.

FIG. 10 is a modular block diagram of a screen control apparatus provided by an embodiment of the present application.

FIG. 11 is a modular block diagram of an in-vehicle screen provided by an embodiment of the present application.

FIG. 12 is a schematic structural diagram of a vehicle provided by an embodiment of the present application.

FIG. 13 is a modular block diagram of a computer-readable storage medium provided by an embodiment of the present application.

**DESCRIPTION OF EMBODIMENTS**

The implementation of the present application will be described in detail below, and examples of the implementation are shown in the accompanying drawings, in which same or similar reference numerals denote the same or similar elements or elements having the same or similar functions. The implementation described below with reference to the accompanying drawings is exemplary and is intended merely to explain the present application, and cannot be construed as limiting the present application.

In order to enable those skilled in the art to better understand the solution of the present application, the technical solutions in the embodiments of the present application will be described clearly and completely with reference to the accompanying drawings in the embodiments of the present application. Obviously, the described embodiments are merely some but not all of embodiments of the present application. Based on the embodiments of the present application, all other embodiments obtained by those skilled in the art without creative work should fall within the protection scope of the present application.

With the development and popularity of smart cars, in-vehicle screens play an increasing important role in application scenarios. The size and number of in-vehicle screens are increasing. More and more vehicles are equipped with front passenger display screens. However, an illuminated front passenger display screen usually renders a mirror image on a passenger-side window. The mirror image, especially in the dark, will seriously affect the driver's view of a passenger-side rearview mirror, thus affecting driving safety.

Different solutions to light pollution of front passenger display screens have been proposed for existing vehicles on the market. Four common solutions are as follows: adding a polarizing diaphragm to a front passenger display screen; using a smaller front passenger display screen; adjusting the placement of a front passenger display screen; and providing a brim over the front passenger display screen. However, these four solutions have respective disadvantages. For example, adding a polarizing diaphragm to a front passenger display screen will lower the brightness of the front passenger display screen in all scenarios. Using a smaller front passenger display screen will have a great restriction on the size of the screen. Adjusting the placement of a front passenger display screen will make the distance between the front passenger display screen and the passenger too far. Adding a brim over the front passenger display screen will affect the aesthetics of the interior of the vehicle to some extent and reduce the user experience although the method can prevent light from the front passenger display screen from imaging on a side window.

In order to solve the above technical problems, the applicant put forward a screen control method, a screen control apparatus, an in-vehicle screen and a vehicle in the embodiments of the present application after long-term research and study. The screen control method helps reduce the influence of a front passenger display screen on a driver by detecting illumination in the vehicle and illumination behind the vehicle. Specifically, an illumination intensity inside the vehicle is acquired, followed by judging whether the illumination intensity is lower than a threshold illumination intensity, determining whether illumination behind the vehicle is sufficient within a preset time period if the illumination intensity is lower than the threshold illumination intensity, and reducing the influence of the front passenger display screen of the vehicle on the driver's view of the passenger-side rearview mirror if illumination behind the vehicle is insufficient. According to the present application, the influence of the front passenger display screen on the driver can be reduced to some extent by combining the illumination intensity inside the vehicle and illumination behind the vehicle, so as to improve the user experience while ensuring the driving safety of the driver.

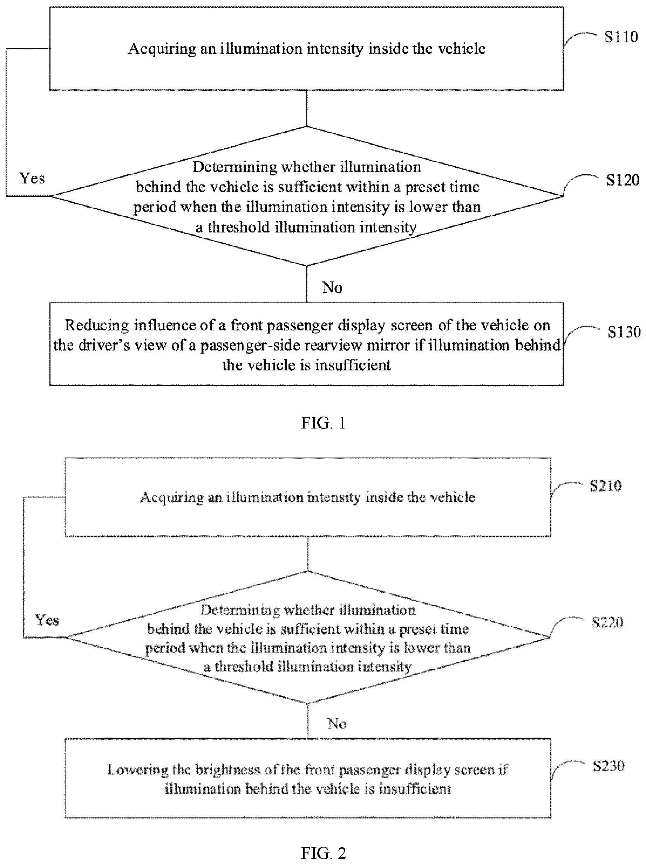

As shown in FIG. 1, a schematic flowchart of a screen control method provided by an embodiment of the present application is schematically shown. The method may include the following Steps S110 to S130.

Step S110: acquiring an illumination intensity inside the vehicle.

In the embodiment of the present application, an illumination sensor may be installed inside the vehicle, and the illumination sensor may be installed on an instrument panel (IP) of the vehicle. In order to detect illumination intensities inside the vehicle more accurately, the vehicle may be equipped with a plurality of illumination sensors installed at different positions according to the embodiment of the present application. Alternatively, an illumination sensor may be installed on a front passenger display screen or on a central control display screen; or on both the front passenger display screen and the central control display screen, so that the screen control can be more accurate.

In some implementations, an illumination sensor inside the vehicle may detect illumination intensity inside the vehicle in real time or at a preset time interval. Alternatively, the vehicle can determine whether the vehicle is running before acquiring an illumination intensity inside the vehicle by an illumination sensor. The illumination intensity inside the vehicle is acquired if the vehicle is running, and it is not necessary to acquire the illumination intensity inside the vehicle if the vehicle is not running.

In some other implementations, according to the embodiment of the present invention, a time period during which the vehicle is running may also be acquired when determining that the vehicle is running, followed by determining whether the time period is a specified time period. If the vehicle is running within the specified time period, the vehicle acquires an illumination intensity inside the vehicle by an illumination sensor. The specified time period may be a time period at night, such as 19:00 to 6:00. The specified time period may also be set based on empirical values. The specified time period may also be acquired according to actual situations, mainly because time periods of day or night are different in different seasons. In order to determine whether a time period is within the specified time period more accurately, the specified time period may be determined on the basis of actual weather according to the embodiment of the present application.

Alternatively, according to the embodiment of the present application, the location of the vehicle may also be acquired when determining that the vehicle is running, followed by determining whether the location is a specified area. If the vehicle is running at the specified area, the vehicle acquires an illumination intensity inside the vehicle by an illumination sensor. The specified area may be a dark area, such as a garage or a tunnel.

In some other implementations, when the vehicle acquires a plurality of illumination intensities inside the vehicle via a plurality of sensors, the vehicle may average the plurality of illumination intensities, and then judge whether the average illumination intensity is lower than a threshold illumination intensity. Alternatively, when the vehicle acquires a plurality of illumination intensities inside the vehicle via a plurality of sensors, the vehicle may also sort the plurality of illumination intensities in a descending order, then determine a maximum illumination intensity and a minimum illumination intensity based on a sorting result, and finally determine whether the maximum illumination intensity is lower than the threshold illumination intensity or whether the minimum illumination intensity is lower than the threshold illumination intensity.

According to an embodiment of the present application, after acquiring an illumination intensity inside the vehicle, the vehicle may judge whether the illumination intensity is lower than the threshold illumination intensity, and determine whether illumination behind the vehicle is sufficient within a preset time period if the illumination intensity is lower than the threshold illumination intensity, that is, the method proceeds to Step S120. If the illumination intensity is greater than or equal to the threshold illumination intensity, an illumination intensity inside the vehicle at the next moment is acquired, that is, the method proceeds to Step S110 again.

In some other implementations, according to an embodiment of the present application, it may also determine whether the front passenger display screen is activated before acquiring an illumination intensity inside the vehicle by an illumination sensor. The illumination intensity inside the vehicle is acquired by the illumination sensor if the front passenger display screen is activated, and the status of the front passenger display screen is continuously detected if the front passenger display screen is not activated, and the illumination sensor is instructed to acquire the illumination intensity inside the vehicle as long as the front passenger display screen is detected to be activated, thereby reducing unnecessary power consumption resulting from screen control. In what specific cases the front passenger display screen of the vehicle can be determined to be activated is not limited herein, and may be set according to actual situations.

Step S120: determining whether illumination behind the vehicle is sufficient within a preset time period when the illumination intensity is lower than a threshold illumination intensity.

In some implementations, the threshold illumination intensity may be set based on empirical values or sensitivity of the driver to light, with a higher sensitivity of the driver to light corresponding to a smaller threshold illumination intensity, and a lower sensitivity of the driver to light corresponding to a larger threshold illumination intensity. The sensitivity of the driver to light may be acquired from historical setting data, and the historical setting data may be set by the driver based on personal needs. Alternatively, the sensitivity of the driver to light may also be acquired by a sensitivity selection control displayed by the vehicle to the driver when the driver starts the vehicle. For example, after a driver A starts the vehicle, a plurality of light sensitivity selection controls may be displayed on the display screen of the vehicle. Upon the driver triggers a button, the vehicle can record the selection accordingly, capture a face image of the driver, and then store the face image and light sensitivity in a one-to-one correspondence manner.

In some other implementations, according to an embodiment of the present application, it may determine whether illumination behind the vehicle is sufficient within a preset time period when determining that the illumination intensity inside the vehicle is lower than the threshold illumination intensity. The preset time period may be a continuous time period, e.g., 60s or 30s. The duration of the preset time period is not specifically limited herein, but can be selected according to actual situations. Alternatively, the preset time period may be a time period after the determination that the illumination intensity is lower than the threshold illumination intensity. For example, it is determined that the illumination intensity inside the vehicle is lower than the threshold illumination intensity at 16:00 on February 6, 2021, and the preset duration is 60s, then the preset time period in this case may be from 16:00 on February 6, 2021 to 16:01 on February 6, 2021.

Optionally, a camera may be provided at the rear of the vehicle to capture scene images behind the vehicle in real time. The captured images are used collectively to analyze whether the illumination intensity behind the vehicle is sufficient, wherein "sufficient" means that light behind the vehicle is greater than a light threshold. The light may be acquired by analyzing brightness and resolution of the images.

Step S130: reducing influence of a front passenger display screen of the vehicle on the driver's view of a passenger-side rearview mirror if illumination behind the vehicle is insufficient.

In some implementations, according to an embodiment of the present application, the influence of the front passenger display screen of the vehicle on the driver's view of the passenger-side rearview mirror may be reduced when determining that illumination behind the vehicle is insufficient. Specifically, the vehicle may enable a light pollution protection function when determining that the illumination intensity inside the vehicle is lower than the threshold illumination intensity and illumination behind the vehicle is insufficient within the preset time period, and the light pollution protection function is mainly configured to reduce the influence of the front passenger display screen of the vehicle on the driver. In other words, the light pollution protection function is mainly configured to avoid unnecessary light interference for the driver from the front passenger display screen under low light conditions.

In some other implementations, enabling a light pollution protection function may include lowering the brightness of the front passenger display screen, or reducing the front passenger display screen to a specified size, or displaying information acquired by the rear camera on the central control display screen in the form of popups, or lowering an installation site of the front passenger display screen.

According to the screen control method provided by the embodiments of the present application, the influence of the front passenger display screen on the driver is reduced by detecting illumination in the vehicle and illumination behind the vehicle. Specifically, an illumination intensity inside the vehicle is acquired, followed by judging whether the illumination intensity is lower than a threshold illumination intensity, determining whether illumination behind the vehicle is sufficient within the preset time period if the illumination intensity is lower than the threshold illumination intensity, and reducing the influence of the front passenger display screen of the vehicle on the driver's view of the passenger-side rearview mirror if illumination behind the vehicle is insufficient. According to the present application, the influence of the front passenger display screen on the driver can be reduced to some extent by combining the illumination intensity inside the vehicle and illumination behind the vehicle, so as to improve the user experience while ensuring the driving safety of the driver.

As shown in FIG. 2, another embodiment of the present application provides a screen control method. The screen control method can be for a vehicle and includes the following Steps S210 to S230.

Step S210: acquiring an illumination intensity inside the vehicle.

Step S220: determining whether illumination behind the vehicle is sufficient within a preset time period when the illumination intensity is lower than a threshold illumination intensity.

Step S230: lowering the brightness of the front passenger display screen if illumination behind the vehicle is insufficient.

In some implementations, reducing the influence of the front passenger display screen of the vehicle on the driver's view of a passenger-side rearview mirror if illumination behind the vehicle is insufficient may include: lowering the brightness of the front passenger display screen. In some other implementations, according to an embodiment of the present application, a brightness difference corresponding to illumination behind the vehicle may be obtained when determining that the illumination intensity inside the vehicle is lower than the threshold illumination intensity and illumination behind the vehicle is insufficient. Then, the brightness of the front passenger display screen is reduced by the brightness difference to obtain a lower brightness. It can be seen that the brightness difference varies with illumination behind the vehicle, and a higher illumination behind the vehicle corresponds a smaller brightness difference. Alternatively, the brightness difference may also be associated with the illumination intensity inside the vehicle, and a higher illumination intensity corresponds to a smaller brightness difference.

As an example, the brightness of the front passenger display screen is A. When determining that a brightness intensity B inside the vehicle is lower than a brightness threshold and illumination behind the vehicle is insufficient within the preset time period, the brightness of the front passenger display screen is lowered. If a brightness difference is O, the brightness of the front passenger display screen is lowered to (A-O).

In an embodiment of the present application, the vehicle may also adjust brightness of the front passenger display screen to a specified brightness when determining that the illumination intensity inside the vehicle is lower than the threshold illumination intensity and illumination behind the vehicle is insufficient. The specified brightness is lower than the brightness of the front passenger display screen before the adjustment. The manner the brightness of the front passenger display screen is adjusted is not limited herein.

It should be noted that according to an embodiment of the present application, current operation data of the front passenger display screen may also be acquired before lowering the brightness of the front passenger display screen, followed by determining a current operation level of the front passenger display screen based on the operation data, and then determining whether the operation level is lower than a preset level. The brightness of the front passenger display screen is lowered if the current operation level of the front passenger display screen is lower than the preset level. The current operation level of the front passenger display screen may be determined based on how often a user operates the front passenger display screen. A higher operation frequency indicates a higher operation level. The current operation level of the front passenger display screen may also be determined based on what is currently displayed on the front passenger display screen, such that if the front passenger display screen is playing a video, the corresponding level is higher; and if the front passenger display screen is not playing a video, the corresponding level is lower.

Alternatively, according to an embodiment of the present application, the influence of the front passenger display screen on the driver may be reduced without lowering the brightness of the front passenger display screen when determining that the operation level of the front passenger display screen is higher than or equal to the preset level. In this case, according to the embodiment of the present application, video information acquired by a rearview mirror may be displayed on the central control display screen, or a display area of the front passenger display screen may also be reduced. Refer to the following embodiments for details.

Optionally, according to the embodiment of the present application, a sight map of the driver may also be detected and acquired when illumination behind the vehicle is insufficient and before a light pollution protection function of the vehicle is enabled. Then the sight map of the driver is analyzed to obtain a sight analysis result before determining whether the driver is observing the passenger-side rearview mirror based on the sight analysis result. If the driver is observing the passenger-side rearview mirror, the influence of the front passenger display screen of the vehicle on the driver's view of the passenger-side rearview mirror is reduced.

Specifically, according to the embodiment of the present application, it may be determined whether the driver is observing the passenger-side rearview mirror within a preset time period. A light pollution protection function is enabled if the driver is detected to be observing the passenger-side rearview mirror, wherein the preset time period refers to a time period during which illumination behind the vehicle is determined to be insufficient. The light pollution protection function is not enabled if the driver is not detected to be observing the passenger-side rearview mirror. Alternatively, according to an embodiment of the present application, the driver's sight may be detected in real time through an image capture apparatus, and it is determined that the driver is observing the passenger-side rearview mirror when determining that the driver's sight meets preset conditions. For example, when the image capture apparatus detects that the driver's sight turns to the passenger-side rearview mirror, the driver is determined to be observing the passenger-side rearview mirror.

According to the screen control method provided by the embodiments of the present application, the influence of the front passenger display screen on the driver is reduced by detecting illumination in the vehicle and illumination behind the vehicle. Specifically, an illumination intensity inside the vehicle is acquired, followed by judging whether the illumination intensity is lower than the threshold illumination intensity, determining whether illumination behind the vehicle is sufficient within the preset time period if the illumination intensity is lower than the threshold illumination intensity, and lowering the brightness of the front passenger display screen if illumination behind the vehicle is insufficient. According to the present application, the influence of the front passenger display screen on the driver can be reduced to some extent by combining the illumination intensity inside the vehicle and illumination behind the vehicle, so as to improve the user experience. Alternatively, according to the embodiments of the present application, the influence of the front passenger display screen on the driver is reduced by adjusting the brightness of the front passenger display screen. The adjustment is simple and easy to implement, and also takes into account the passenger experience, i.e., the front passenger display screen is used normally without affecting the user experience when the illumination intensity is acceptable.

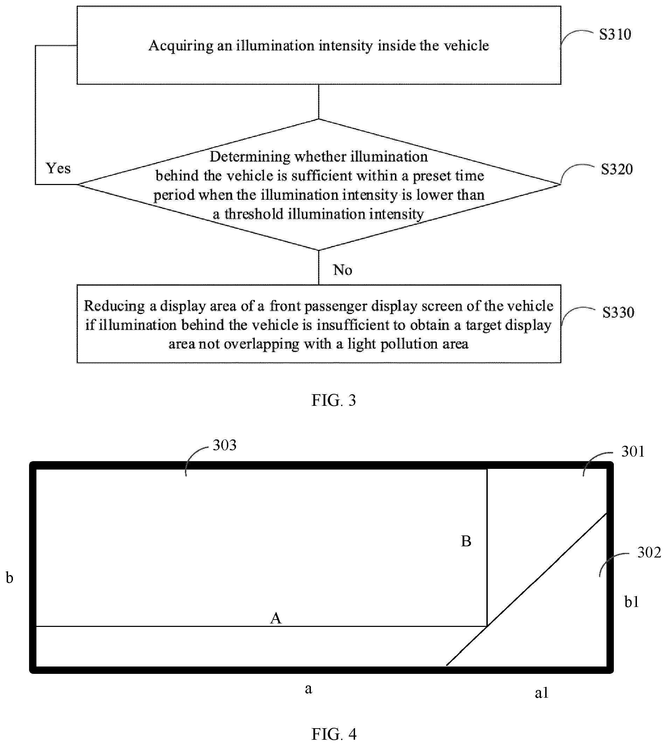

As shown in FIG. 3, another embodiment of the present application provides a screen control method. The screen control method can be for a vehicle and includes the following Steps S310 to S330.

Step S310: acquiring an illumination intensity inside the vehicle.

Step S320: determining whether illumination behind the vehicle is sufficient within a preset time period when the illumination intensity is lower than a threshold illumination intensity.

Step S330: reducing a display area of a front passenger display screen of the vehicle if illumination behind the vehicle is insufficient to obtain a target display area not overlapping with a light pollution area.

In the embodiment of the present application, the display area of the front passenger display screen may include a light pollution area, where light from the light pollution area renders a mirror image on a passenger-side window when the light pollution area is illuminated, and the mirror image obscures the driver's sight to observe a passenger-side rearview mirror. According to the embodiment of the present application, the display area of the front passenger display screen may be reduced to obtain a target display area not overlapping with the light pollution area when determining that the illumination intensity inside the vehicle is lower than the threshold illumination intensity and illumination behind the vehicle is insufficient. For better understanding of the relationship among the display area, the light pollution area and the target display area more clearly, a diagram as shown in FIG. 4 is provided. In FIG. 4, 301 denotes an original display area of a front passenger display screen, 302 denotes a light pollution area, and 303 denotes a display area with less light pollution, i.e., 303 denotes a target display area.

Optionally, the light pollution area 302 may be triangular. The light pollution area 302 may be preset before delivery of the vehicle, and the size of the light pollution area 302 may vary depending on vehicles. Specifically, according to an embodiment of the present application, the influence of the front passenger display screen on a rearview mirror under different conditions of the vehicle may subject to statistics analysis, so as to determine the size of the light pollution area 302. The front passenger display screen is close to a passenger-side front window, so when the front passenger display screen is illuminated, the displayed content will render a mirror image in the front window near the passenger side. The mirror image will affect the driver's normal view of the passenger-side rearview mirror, and an imaging of the light pollution area 302 can obscure the driver's view, i.e., image of the light pollution area 302 on the passenger side, the passenger-side rearview mirror and the driver's seat may be on a same light path.

Optionally, the light pollution area 302 may also be an area set by the driver according to personal needs, i.e., when the driver starts the vehicle, the vehicle may display an input interface for the light pollution area 302. After the driver inputs on the light pollution area 302, the light pollution area 302 and identity information of the driver may be stored in a one-to-one correspondence according to an embodiment of the present application. According to the embodiment of the present application, the light pollution area 302 matched with the driver may be acquired when the driver uses the vehicle again, and then the display area of the front passenger display screen is adjusted based on the light pollution area 302.

In other implementations, the vehicle may also acquire the light pollution area 302 based on height, weight and gender of the driver collectively. Specifically, according to an embodiment of the present application, a light pollution area determination network may be acquired, and then the light pollution area determination network is trained by using a training data set to obtain a light pollution area determination model. The training data set may include a plurality of sets of sub-training data, and each sub-training data set may comprise height, weight, gender, and the like. According to the embodiment of the present application, information such as height, weight and gender of the driver may be acquired after determining that the vehicle is started, and then the information is input to the light pollution area determination network, so as to obtain the light pollution area 302 corresponding to the driver.

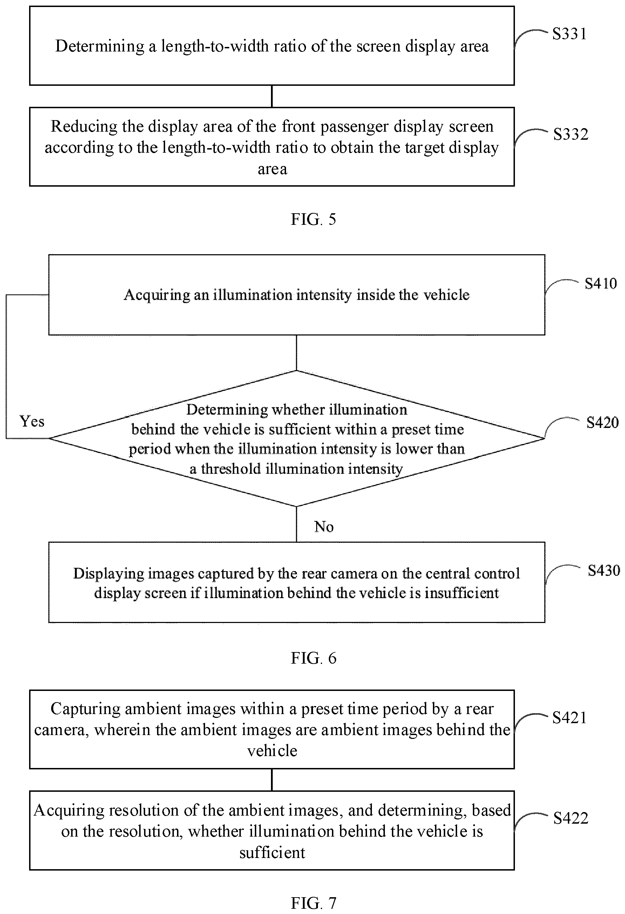

Referring to FIG. 5, Step S330 may include Steps S331 to S332.

Step S331: determining a length-to-width ratio of the screen display area.

In some implementations, according to an embodiment of the present application, the length-to-width ratio of the screen display area may be determined after determining that illumination behind the vehicle is insufficient to allow the acquired target display area to be more accurate. The length-to-width ratio may be a length-to-width ratio of the original display area 301 of the front passenger display screen.

Step S332: reducing the display area of the front passenger display screen according to the length-to-width ratio to obtain the target display area.

Optionally, according to an embodiment of the present application, the display area of the front passenger display screen may be reduced according to the length-to-width ratio acquired for the display area of the front passenger display screen, so as to obtain a target display area. The target display area has an upper left fixation point that is overlaps with an upper left fixation point of an original display area of the front passenger display screen, and has a lower right fixation point that falls on a boundary of the light pollution area on the right side of the original display area, see FIG. 4 for details.

Optionally, the light pollution area is triangular, and the length and width of the target display area are calculated by formulas as follows: $A=a-b1(b/a+b1/a1)$, $B=b-b(b/b1+a/a1)$, wherein A represents the length of the target display area, B represents the width of the target display area, a represents the length of the original display area, b represents the width of the original display area, and a1 and b1 represent the lengths of both sides of the light pollution area respectively.

In a specific implementation, the length A of the target display area 303 is equal to the length a of the original display area 301 minus the product of the length b1 of a side of the light pollution area 302 multiplied by the sum of the length-to-width ratio b/a of the original display area 301 and a side length ratio b1/a1 of the light pollution area 302. The width B of the target display area 303 is equal to the width b of the original display area 301 minus the product of the width b of the original display area 301 multiplied by the sum of a ratio (b/b1) of the width b of the original display area 301 to the length b1 of a side of the light pollution area 302 and a ratio (a/a1) of the length a of the original display area 301 to the length a1 of a side of the light pollution area 302.

According to the screen control method provided by the embodiments of the present application, the influence of the front passenger display screen on the driver is reduced by detecting illumination in the vehicle and illumination behind the vehicle. Specifically, an illumination intensity inside the vehicle is acquired, followed by judging whether the illumination intensity is lower than the threshold illumination intensity, determining whether illumination behind the vehicle is sufficient within the preset time period if the illumination intensity is lower than the threshold illumination intensity, and reducing a display area of the front passenger display screen of the vehicle if illumination behind the vehicle is insufficient to obtain a target display area not overlapping with a light pollution area, wherein light from the light pollution area renders a mirror image on a passenger-side window when the light pollution area is illuminated, and the mirror image obscures the driver's sight to observe a passenger-side rearview mirror. According to the present application, the influence of the front passenger display screen on the driver can be reduced to some extent by combining the illumination intensity inside the vehicle and illumination behind the vehicle, so as to improve the user experience. Alternatively, according to the present application, the influence of the front passenger display screen on the driver can be reduced by adjusting the display area of the front passenger display screen when the brightness is low, and the size of the front passenger display screen remains unchanged under normal illumination, so that the user experience is better.

As shown in FIG. 6, another embodiment of the present application provides a screen control method. The screen control method can be for a vehicle and includes the following Steps S410 to S430.

Step S410: acquiring an illumination intensity inside the vehicle.

Step S420: determining whether illumination behind the vehicle is sufficient within a preset time period when the illumination intensity is lower than a threshold illumination intensity.

Referring to FIG. 7, Step S420 may include Steps S421 to S422.

Step S421: capturing ambient images within a preset time period by a rear camera, wherein the ambient images are ambient images behind the vehicle.

Optionally, the vehicle may capture ambient images within a preset time period by the rear camera, wherein the ambient images may be ambient images behind the vehicle. That is, according to an embodiment of the present application, when determining that the illumination intensity is lower than the threshold illumination intensity, the rear camera may be instructed to capture images continuously for a preset duration, e.g., 60s, and then analyze the images captured in the continuous time period. Specifically, according to an embodiment of the present application, the brightness of the captured images may be analyzed to determine whether the brightness is continuously greater than a brightness threshold. Illumination behind the vehicle is determined to be sufficient if the brightness is continuously greater than the brightness threshold, while illumination behind the vehicle is determined to be insufficient if the brightness is not continuously greater than the brightness threshold.

In some other implementations, according to an embodiment of the present application, resolution of all images within a preset time period may be acquired when determining that the brightness at the passenger rear side of the vehicle is not continuously greater than a brightness threshold. A determination is made as to whether the resolution of each image is greater than a resolution threshold. Illumination behind the vehicle is determined to be sufficient if the resolution of each of the images is greater than the resolution threshold, while illumination behind the vehicle is determined to be insufficient if the resolution is lower than or equal to the resolution threshold, as described in detail below.

Step S422: acquiring resolution of the ambient images, and determining, based on the resolution, whether illumination behind the vehicle is sufficient.

Optionally, according to an embodiment of the present application, it is possible to determine whether illumination at a passenger-side rear end of the vehicle is sufficient simply based on the resolution corresponding to images captured by the rear camera. That is, it is possible to determine whether illumination behind the vehicle is sufficient when the resolution of ambient images captured in continuous time periods are greater than the resolution threshold. The rear camera refers to a passenger-side rear camera.

Step S430: displaying images captured by the rear camera on the central control display screen if illumination behind the vehicle is insufficient.

In some implementations, the vehicle includes a central control display screen and a rear camera. According to an embodiment of the present application, when determining that an illumination intensity inside the vehicle is lower than the threshold illumination intensity and illumination behind the vehicle is insufficient, scene images at a passenger-side rear end may be captured by the rear camera, and the captured scene images are displayed on the central control display screen in the form of popups. The central control display screen is a conventional display screen provided near the driver's seat, through which the driver may watch videos or listen to music and navigate. The front passenger display screen is a display screen configured near the driver, through which the passenger may watch videos, listen to music and navigate.

In a specific implementation, a passenger seat may be located on the right side or the left side of the vehicle. According to an embodiment of the present application, when the passenger seat is located on the right side of the vehicle, a determination may be made as to whether the front passenger display screen is activated. If the front passenger display screen is activated, a determination whether the current ambient light is weak may be made through a light sensor, such as at night or in basement. If the light is normal, no operation is performed. If the light is weak, the vehicle may judge through a rearview camera whether there is satisfactory lighting equipment behind the vehicle within 60s, and if not, the brightness of the front passenger display screen is dimmed, or the display area of the front passenger display screen may also be reduced, or a streaming right rearview mirror floating window may also be activated on the central control display screen.

Optionally, developers may determine light pollution areas through digital model simulation, and an image of a lower right corner area of the front passenger display screen on a side window is a main light pollution area that affects the driver's view of an exterior rearview mirror. Therefore, according to the embodiments of the present application, light pollution resulting from the front passenger display screen may be eliminated by reducing the display area to a target display area. Optionally, according to the embodiments of the present application, real-time information acquired by a passenger-side external rearview camera may also be displayed on the central control display screen in the form of floating windows, so that the driver may acquire passenger-side traffic conditions of the vehicle through real-time images captured by the camera, thereby ensuring driving safety.

In some other implementations, with a light pollution protection function enabled, the vehicle can detect external light in real time. The light pollution protection function of the front passenger display screen may be automatically disabled when external light gets better. Specifically, according to an embodiment of the present application, when an illumination intensity inside the vehicle is lower than a threshold illumination intensity and illumination behind the vehicle is insufficient, the brightness of the front passenger display screen may be lowered, or the display area of the front passenger display screen may also be reduced, or images captured by the rear camera may also be displayed on the central control display screen in the form of popups. When it is continuously detected that illumination behind the vehicle is sufficient or the illumination intensity inside the vehicle is greater than the threshold illumination intensity, light pollution protection function may be disable. That is, if the brightness of the front passenger display screen is lowered, the brightness of the front passenger display screen is restored to the normal brightness; if the display area of the front passenger display screen is reduced, the display area of the front passenger display screen is restored to the original display area; and if images captured by the rear camera are displayed on the central control display screen in the form of popups, the popups are closed.

According to the above illustration, enabling the light pollution protection functions may include lowering the brightness of the front passenger display screen, reducing the display area of the front passenger display screen, and displaying images captured by the rear camera on the central control display screen. According to the embodiments of the present application, when an illumination intensity inside the vehicle is lower than the threshold illumination intensity and illumination behind the vehicle is insufficient, any one of the above-mentioned light pollution protection functions may be enabled. A corresponding light pollution protection function may also be enabled according to information input by a user, i.e., the light pollution protection function may be determined according to data input by the user. For example, if the user inputs a voice "reduce the display area of the front passenger display screen", the display area of the front passenger display screen may be reduced accordingly. The light pollution protection function may also be determined depending on actual environment. For example, when determining that the front passenger display screen is playing a video, images captured by the rear camera may be displayed on the central control display screen in the form of popups. Alternatively, according to an embodiment of the present application, a plurality of light pollution protection functions may also be enabled at the same time. How to enable the light pollution protection functions and which light pollution protection functions will be enabled are not specifically limited herein, and can be selected according to actual situations.

According to the screen control method provided by the embodiments of the present application, the influence of the front passenger display screen on the driver is reduced by detecting illumination in the vehicle and illumination behind the vehicle. Specifically, an illumination intensity inside the vehicle is acquired, followed by judging whether the illumination intensity is lower than the threshold illumination intensity, determining whether illumination behind the vehicle is sufficient within the preset time period if the illumination intensity is lower than the threshold illumination intensity, and displaying images captured by the rear camera on the central control display screen if illumination behind the vehicle is insufficient. According to the present application, the influence of the front passenger display screen on the driver can be reduced to some extent by combining the illumination intensity inside the vehicle and illumination behind the vehicle, so as to improve the user experience. Alternatively, real-time information acquired by a passenger-side external rearview camera is displayed on the central control display screen in the form of floating windows, so that the driver can acquire passenger-side traffic conditions of the vehicle through real-time images captured by the camera, thereby ensuring driving safety. Therefore, according to the embodiments of the present application, the user experience (brightness, size, position and artistics) of the front passenger display screen is ensured to the greatest extent while addressing light pollution of the front passenger display screen.

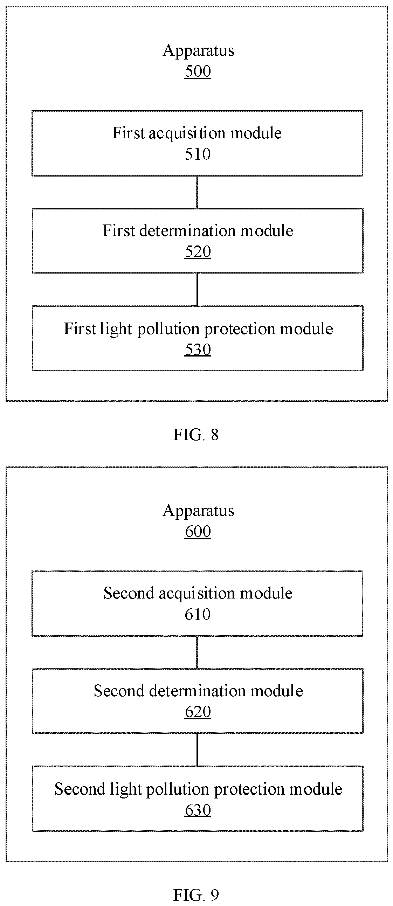

As shown in FIG. 8, an embodiment of the present application further provides a screen control apparatus 500, and the screen control apparatus 500 includes a first acquisition module 510, a first determination module 520 and a first light pollution protection module 530.

The first acquisition module 510 is configured to acquire an illumination intensity inside the vehicle.

The first determination module 520 is configured to determine whether illumination behind the vehicle is sufficient within a preset time period when the illumination intensity is lower than a threshold illumination intensity.

The first light pollution protection module 530 is configured to reduce influence of a front passenger display screen of the vehicle on the driver's view of a passenger-side rearview mirror if illumination behind the vehicle is insufficient.

Furthermore, the first light pollution protection module 530 is further configured to lower the brightness of the front passenger display screen if illumination behind the vehicle is insufficient.

Furthermore, the screen control apparatus 500 is further configured to acquire a sight map of the driver when illumination behind the vehicle is insufficient; analyze the sight map of the driver to obtain a sight analysis result, and determine whether the driver is observing the passenger-side rearview mirror based on the sight analysis result; and reduce the influence of the front passenger display screen of the vehicle on the driver's view of the passenger-side rearview mirror if the driver is observing the passenger-side rearview mirror.

As shown in FIG. 9, an embodiment of the present application further provides a screen control apparatus 600, and the screen control apparatus 600 includes a second acquisition module 610, a second determination module 620 and a second light pollution protection module 630.

The second acquisition module 610 is configured to acquire an illumination intensity inside the vehicle.

The second determination module 620 is configured to determine whether illumination behind the vehicle is sufficient within a preset time period when the illumination intensity is lower than a threshold illumination intensity.

The second light pollution protection module 630 is configured to reduce a display area of the front passenger display screen of the vehicle if illumination behind the vehicle is insufficient to obtain a target display area not overlapping with a light pollution area, wherein light from the light pollution area renders a mirror image on a passenger-side window when the light pollution area is illuminated, and the mirror image obscures the driver's sight to observe a passenger-side rearview mirror.

Furthermore, the second light pollution protection module 630 is further configured to determine a length-to-width ratio of the screen display area; and reduce the display area of the front passenger display screen according to the length-to-width ratio to obtain the target display area, where an upper left fixation point of the target display area overlaps with an upper left fixation point of an original display area of the front passenger display screen, and a lower right fixation point of the target display area falls on a boundary of the light pollution area on the right side of the original display area.

Furthermore, the light pollution area is triangular, and length and width of the target display area are calculated by formulas as follows: A=a-b1(b/a+b1/a1), B=b-b(b/b1+a/a1), wherein A represents the length of the target display area, B represents the width of the target display area, a represents the length of the original display area, b represents the width of the original display area, and a1 and b1 represent the length of two sides of the light pollution area respectively.

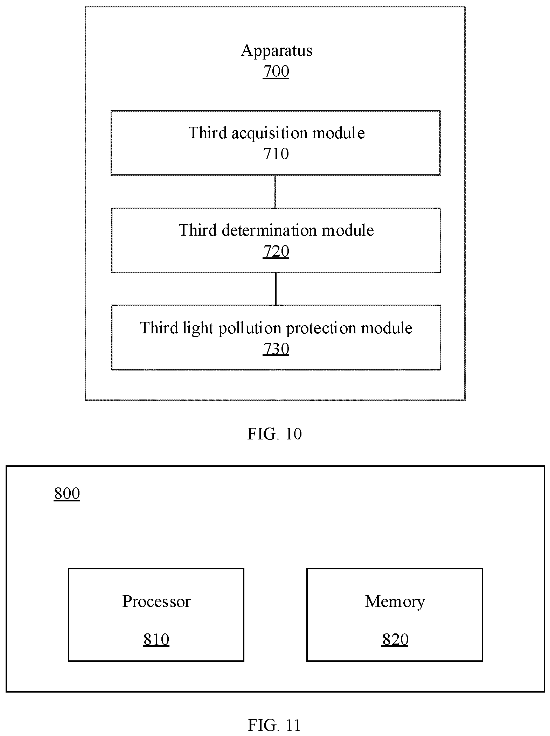

As shown in FIG. 10, an embodiment of the present application further provides a screen control apparatus 700, and the screen control apparatus 700 includes a third acquisition module 710, a third determination module 720 and a third light pollution protection module 730.

The third acquisition module 710 is configured to acquire an illumination intensity inside the vehicle.

The third determination module 720 is configured to determine whether illumination behind the vehicle is sufficient within a preset time period when the illumination intensity is lower than a threshold illumination intensity.

Furthermore, the third determination module 720 is further configured to capture ambient images within a preset time period by the rear camera, wherein the ambient images are ambient images behind the vehicle; and acquire resolution of the ambient images, and determine, based on the resolution, whether illumination behind the vehicle is sufficient.

The third light pollution protection module 730 is configured to display images captured by the rear camera on the central control display screen if illumination behind the vehicle is insufficient.

The screen control apparatuses provided by the embodiments of the present application facilitates reduction of influence of the front passenger display screen on the driver by detecting illumination in the vehicle and illumination behind the vehicle. Specifically, an illumination intensity inside the vehicle is acquired, followed by judging whether the illumination intensity is lower than the threshold illumination intensity, determining whether illumination behind the vehicle is sufficient within the preset time period if the illumination intensity is lower than the threshold illumination intensity, and reducing the influence of the front passenger display screen of the vehicle on the driver's view of the passenger-side rearview mirror if illumination behind the vehicle is insufficient. According to the present application, the influence of the front passenger display screen on the driver can be reduced to some extent by combining illumination intensity inside the vehicle and illumination behind the vehicle, so as to improve the user experience.

As shown in FIG. 11, an embodiment of the present application further provides an in-vehicle screen 800 including a processor 810 and memory 820 having stored thereon computer program instructions which, when executed by the processor 810, result in performance of the screen control method described above.

The processor 810 may include one or more processing cores. The processor 810 is connected to parts of the in-vehicle screen through various interfaces and lines to execute various functions of the in-vehicle screen and process data by running or executing instructions, programs, code sets or instruction sets stored in the memory 820, and by calling data stored in the memory 820. Optionally, the processor 810 may be implemented in at least one of a digital signal processing (DSP), a field-programmable gate array (FPGA) and a programmable logic array (PLA). The processor 810 may be integrated with one or a combination of a central processing unit 810 (CPU), a graphics processing unit 810 (GPU) and a modem. The CPU mainly processes operating systems, user interfaces and applications, the GPU is responsible for rendering and drawing display contents, and the modem is configured to handle wireless communications. It should be understood that the above-mentioned modem may also be implemented by a communication chip rather than being integrated into the processor 810.

The memory 820 may include a random access memory 820 (RAM) or a read-only memory 820. The memory 820 may be configured to store instructions, programs, codes, code sets or instruction sets. The memory 820 may include a program storage area and a data storage area. The program storage area may store instructions for implementing an operating system, instructions for implementing at least one function, instructions for implementing the above-mentioned method embodiments, and the like. The data storage area may store data generated by the in-vehicle screen in use.

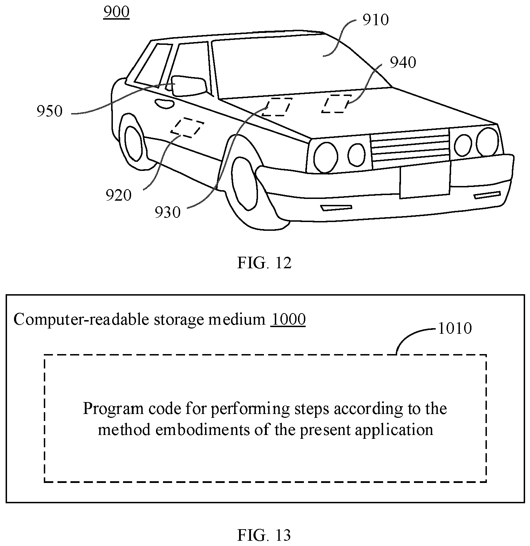

As shown in FIG. 12, an embodiment of the present application further provides a vehicle 900 including a vehicle body 910, a vehicle control unit 920, a front passenger display screen 930, a central control display screen 940 and a passenger-side rearview mirror 950. The vehicle control unit 920, the front passenger display screen 930 and the central control display screen 940 may be provided in the vehicle body 910. The front passenger display screen 930 and the central control display screen 940 may be referred to as in-vehicle screens. The vehicle control unit 920 is connected to the front passenger display screen 930 and the central control display screen 940 respectively, and can control the front passenger display screen 930 and the central control display screen 940 to output different display information. Data may be exchanged between the front passenger display screen 930 and the central control display screen 940. The passenger-side rearview mirror 950 is mainly configured to assist the driver in viewing passenger-side rear scenes.

As shown in FIG. 13, an embodiment of the present application further provides a computer-readable storage medium 1000 having stored thereon computer program instructions 1010 which, when executed by a processor, result in performance of the method in the above-mentioned embodiments.

The computer-readable storage medium may be an electronic memory such as flash memory, EEPROM, EPROM, hard disk or ROM. Optionally, the computer-readable storage medium includes a non-transitory computer-readable storage medium. The computer-readable storage medium 1000 has a storage space for program codes for executing any one of the method steps in the above method. These program codes may be read from or written into one or more computer program products. The program codes may, for example, be compressed in an appropriate form.

**Claims**

1. A screen control method for a vehicle, comprising:

   acquiring (S110) illumination intensity inside the vehicle;
   **characterised by**:

   determining (S120) whether illumination intensity behind the vehicle is sufficient within a preset time period when the illumination intensity inside the vehicle is lower than threshold illumination intensity; and
   reducing (S130) influence of a front passenger display screen of the vehicle on a driver's view of a passenger-side rearview mirror if the illumination intensity behind the vehicle is insufficient.

2. The method according to claim 1, wherein said reducing (S130) influence of the front passenger display screen of the vehicle on the driver's view of the passenger-side rearview mirror if the illumination intensity behind the vehicle is insufficient comprises: lowering (S230) brightness of the front passenger display screen.

3. The method according to claim 1 or 2, further comprising, before said reducing (S130) influence of the front passenger display screen of the vehicle on the driver's view of the passenger-side rearview mirror:

   acquiring a sight map of the driver if the illumination intensity behind the vehicle is insufficient;
   analyzing the sight map of the driver to obtain a sight analysis result, and determining whether the driver is observing the passenger-side rearview mirror based on the sight analysis result; and
   reducing influence of the front passenger display screen of the vehicle on the driver's view of the passenger-side rearview mirror if the driver is observing the passenger-side rearview mirror.

4. A screen control method for a vehicle, comprising:

   acquiring (S310) illumination intensity inside the vehicle;
   **characterised by**:

   determining (S320) whether illumination intensity behind the vehicle is sufficient within a preset time period when the illumination intensity inside the vehicle is lower than threshold illumination intensity; and
   reducing (S330) a display area of a front passenger display screen of the vehicle if the illumination intensity behind the vehicle is insufficient to obtain a target display area (303) not overlapping with a light pollution area (302), wherein light from the light pollution area (302) renders a mirror image on a passenger-side window when the light pollution area (302) is illuminated, and the mirror image obscures the driver's sight to observe a passenger-side rearview mirror.

5. The method according to claim 4, wherein said reducing (S330) a display area of the front passenger display screen if the illumination intensity behind the vehicle is insufficient to obtain a target display area (303) comprises:

   determining (S331) a length-to-width ratio of the screen display area;
   reducing (S332) the display area of the front passenger display screen according to the length-to-width ratio to obtain the target display area, where an upper left fixation point of the target display area overlaps with an upper left fixation point of an original display area (301) of the front passenger display screen, and a lower right fixation point of the target display area falls on a boundary of the light pollution area (302) on the right side of the original display area (301).

6.  The method according to claim 5, wherein the light pollution area (302) is triangular, and length and width of the target display area are calculated by formulas as follows:

$$A=a-b1(b/a+b1/a1), \ B=b-b(b/b1+a/a1);$$

where A represents the length of the target display area, B represents the width of the target display area, a represents the length of the original display area (301), b represents the width of the original display area (301), and a1 and b1 represent the length of two sides of the light pollution area (302) respectively.

7.  A screen control method for a vehicle comprising a central control display screen and a rear camera, comprising:

    acquiring (S410) illumination intensity inside the vehicle;
    **characterised by**:

    determining (S420) whether illumination intensity behind the vehicle is sufficient within a preset time period when the illumination intensity inside the vehicle is lower than threshold illumination intensity; and
    displaying (S430) images captured by the rear camera on the central control display screen if the illumination intensity behind the vehicle is insufficient.

8.  The method according to claim 7, wherein said determining (S420) whether the illumination intensity behind the vehicle is sufficient within a preset time period comprises:

    capturing (S421) ambient images within a preset time period by the rear camera, wherein the ambient images are ambient images behind the vehicle; and
    acquiring (S422) resolution of the ambient images, and determining, based on the resolution, whether the illumination intensity behind the vehicle is sufficient.

9.  A screen control apparatus (500) for a vehicle, comprising:

an acquisition module (510), configured to acquire illumination intensity inside the vehicle;
**characterised by**:

a determination module (520), configured to determine whether illumination intensity behind the vehicle is sufficient within a preset time period when the illumination intensity inside the vehicle is lower than threshold illumination intensity; and
a light pollution protection module (530), configured to reduce influence of a front passenger display screen of the vehicle on a driver's view of a passenger-side rearview mirror if the illumination intensity behind the vehicle is insufficient.

10. A screen control apparatus (600) for a vehicle, comprising:

an acquisition module (610), configured to acquire illumination intensity inside the vehicle;
**characterised by**:

a determination module (620), configured to determine whether illumination intensity behind the vehicle is sufficient within a preset time period when the illumination intensity inside the vehicle is lower than threshold illumination intensity; and
a light pollution protection module (630), configured to reduce a display area of the front passenger display screen of the vehicle if the illumination intensity behind the vehicle is insufficient to obtain a target display area (303) not overlapping with a light pollution area (302), wherein light from the light pollution area (302) renders a mirror image on a passenger-side window when the light pollution area (302) is illuminated, and the mirror image obscures the driver's sight to observe a passenger-side rearview mirror.

11. A screen control apparatus (700) for a vehicle, comprising:

an acquisition module (710), configured to acquire illumination intensity inside the vehicle;
**characterised by**:

a determination module (720), configured to determine whether illumination intensity behind the vehicle is sufficient within a preset time period when the illumination intensity inside the vehicle is lower than threshold illumination intensity; and
a light pollution protection module (730), configured to display images captured by a rear camera on a central control display screen if the illumination intensity behind the vehicle is insufficient.

12. An in-vehicle screen (800), comprising:

one or more processors (810);
memory (820); and
one or more programs stored in the memory (820) configured to be executed by the one or more processors (810) to perform the method according to any one of claims 1 to 7.

13. A computer-readable storage medium (1000), comprising a program code stored thereupon which, when executed by a processor, results in performance of the method according to any one of claims 1 to 7.

14. A vehicle (900), comprising a vehicle body (910), a vehicle control unit (920) and the in-vehicle screen (800) according to claim 12 arranged in the vehicle body, wherein the vehicle control unit is connected to the in-vehicle screen.

**Patentansprüche**

1. Bildschirmsteuerverfahren für ein Fahrzeug, das Folgendes beinhaltet:

Erfassen (S 110) der Beleuchtungsstärke im Inneren des Fahrzeugs;
**gekennzeichnet durch**:

Feststellen (S 120), ob die Beleuchtungsstärke hinter dem Fahrzeug innerhalb einer voreingestellten Zeitspanne ausreichend ist, wenn die Beleuchtungsstärke im Inneren des Fahrzeugs niedriger ist als eine Schwellenbeleuchtungsstärke; und
Reduzieren (S130) des Einflusses eines Beifahreranzeigeschirms des Fahrzeugs auf die Sicht eines Fahrers auf einen beifahrerseitigen Rückspiegel, wenn die Beleuchtungsstärke hinter dem Fahrzeug unzureichend ist.

2. Verfahren nach Anspruch 1, wobei das genannte Reduzieren (S130) des Einflusses des Beifahreranzeigeschirms des Fahrzeugs auf die Sicht des Fahrers auf den beifahrerseitigen Rückspiegel, wenn die Beleuchtungsstärke hinter dem Fahrzeug unzureichend ist, Folgendes beinhaltet:
Verringern (S230) der Helligkeit des Beifahreranzeigeschirms.

3. Verfahren nach Anspruch 1 oder 2, das ferner, vor dem genannten Reduzieren (S130) des Einflusses des Beifahreranzeigeschirms des Fahrzeugs auf die Sicht des Fahrers auf den beifahrerseitigen Rückspiegel, Folgendes beinhaltet:

Erfassen einer Sichtkarte des Fahrers, wenn die Beleuchtungsstärke hinter dem Fahrzeug unzureichend ist;
Analysieren der Sichtkarte des Fahrers, um ein Sichtanalyseergebnis zu erhalten, und Feststellen, ob der Fahrer auf den beifahrerseitigen Rückspiegel blickt, auf der Basis des Sichtanalyseergebnisses; und
Reduzieren des Einflusses des Beifahreranzeigeschirms des Fahrzeugs auf die Sicht des Fahrers auf den beifahrerseitigen Rückspiegel, wenn der Fahrer auf den beifahrerseitigen Rückspiegel blickt.

4. Bildschirmsteuerverfahren für ein Fahrzeug, das Folgendes beinhaltet:

Erfassen (S310) der Beleuchtungsstärke im Inneren des Fahrzeugs;
**gekennzeichnet durch**:

Feststellen (S320), ob die Beleuchtungsstärke hinter dem Fahrzeug innerhalb einer voreingestellten Zeitspanne ausreichend ist, wenn die Beleuchtungsstärke im Inneren des Fahrzeugs niedriger als eine Schwellenbeleuchtungsstärke ist; und
Verkleinern (S330) eines Anzeigebereichs eines Beifahreranzeigeschirms des Fahrzeugs, wenn die Beleuchtungsstärke hinter dem Fahrzeug nicht ausreicht, um einen Zielanzeigebereich (303) zu erhalten, der nicht mit einem Lichtverschmutzungsbereich (302) überlappt, wobei Licht vom Lichtverschmutzungsbereich (302) ein Spiegelbild auf einem beifahrerseitigen Fenster erzeugt, wenn der Lichtverschmutzungsbereich (302) beleuchtet wird, und das Spiegelbild die Sicht des Fahrers beim Blicken auf einen beifahrerseitigen Rückspiegel verdeckt.

5. Verfahren nach Anspruch 4, wobei das genannte Verkleinern (S330) eines Anzeigebereichs des Beifahreranzeigeschirms, wenn die Beleuchtungsstärke hinter dem Fahrzeug nicht ausreicht, um einen Zielanzeigebereich (303) zu erhalten, Folgendes beinhaltet:

Bestimmen (S331) eines Länge-zu-Breite-Verhältnisses des Bildschirmanzeigebereichs;
Verkleinern (S332) des Anzeigebereichs des Beifahreranzeigeschirms entsprechend dem Länge-zu-Breite-Verhältnis, um den Zielanzeigebereich zu erhalten, wobei ein oberer linker Fixierungspunkt des Zielanzeigebereichs mit einem oberen linken Fixierungspunkt eines ursprünglichen Anzeigebereichs (301) des Beifahreranzeigeschirms überlappt und ein unterer rechter Fixierungspunkt des Zielanzeigebereichs auf eine Begrenzung des Lichtverschmutzungsbereichs (302) auf der rechten Seite des ursprünglichen Anzeigebereichs (301) fällt.

6. Verfahren nach Anspruch 5, wobei der Lichtverschmutzungsbereich (302) dreieckig ist und die Länge und Breite des Zielanzeigebereichs mit den folgenden Formeln berechnet werden:

$$A=a-b1(b/a+b1/a1),\ B=b-b(b/b1+a/a1);$$

wobei A die Länge des Zielanzeigebereichs darstellt, B die Breite des Zielanzeigebereichs darstellt, a die Länge des ursprünglichen Anzeigebereichs (301) darstellt, b die Breite des ursprünglichen Anzeigebereichs (301) darstellt und a1 und b1 jeweils die Länge von zwei Seiten des Lichtverschmutzungsbereichs (302) darstellen.

7. Bildschirmsteuerverfahren für ein Fahrzeug mit einem zentralen Steueranzeigeschirm und einer Heckkamera, das Folgendes beinhaltet:

Erfassen (S410) der Beleuchtungsstärke im Inneren des Fahrzeugs;
**gekennzeichnet durch**:

Feststellen (S420), ob die Beleuchtungsstärke hinter dem Fahrzeug innerhalb einer voreingestellten Zeitspanne ausreichend ist, wenn die Beleuchtungsstärke im Inneren des Fahrzeugs niedriger als eine Schwellenbeleuchtungsstärke ist; und Anzeigen (S430) von von der Heckkamera aufgenommenen Bildern auf dem zentralen Steueranzeigeschirm, wenn die Beleuchtungsstärke hinter dem Fahrzeug unzureichend ist.

8. Verfahren nach Anspruch 7, wobei das genannte Feststellen (S420), ob die Beleuchtungsstärke hinter dem Fahrzeug innerhalb einer voreingestellten Zeitspanne ausreichend ist, Folgendes beinhaltet:

Aufnehmen (S421) von Umgebungsbildern innerhalb einer voreingestellten Zeitspanne durch die Heckkamera, wobei die Umgebungsbilder Umgebungsbilder hinter dem Fahrzeug sind; und

Erfassen (S422) der Auflösung der Umgebungsbilder und Feststellen, auf der Basis der Auflösung, ob die Beleuchtungsstärke hinter dem Fahrzeug ausreichend ist.

9. Bildschirmsteuervorrichtung (500) für ein Fahrzeug, die Folgendes umfasst:

ein Erfassungsmodul (510), das zum Erfassen der Beleuchtungsstärke im Inneren des Fahrzeugs konfiguriert ist;
**gekennzeichnet durch**:

ein Feststellungsmodul (520), das zum Feststellen konfiguriert ist, ob die Beleuchtungsstärke hinter dem Fahrzeug innerhalb einer voreingestellten Zeitspanne ausreichend ist, wenn die Beleuchtungsstärke im Inneren des Fahrzeugs niedriger als eine Schwellenbeleuchtungsstärke ist; und
ein Lichtverschmutzungsschutzmodul (530), das zum Reduzieren des Einflusses eines Beifahreranzeigeschirms des Fahrzeugs auf die Sicht eines Fahrers auf einen beifahrerseitigen Rückspiegel konfiguriert ist, wenn die Beleuchtungsstärke hinter dem Fahrzeug unzureichend ist.

10. Bildschirmsteuervorrichtung (600) für ein Fahrzeug, die Folgendes umfasst:

ein Erfassungsmodul (610), das zum Erfassen der Beleuchtungsstärke im Inneren des Fahrzeugs konfiguriert ist;
**gekennzeichnet durch**:

ein Feststellungsmodul (620), das zum Feststellen konfiguriert ist, ob die Beleuchtungsstärke hinter dem Fahrzeug innerhalb einer voreingestellten Zeitspanne ausreichend ist, wenn die Beleuchtungsstärke im Inneren des Fahrzeugs niedriger als eine Schwellenbeleuchtungsstärke ist; und
ein Lichtverschmutzungsschutzmodul (630), das zum Verkleinern eines Anzeigebereichs des Beifahreranzeigeschirms des Fahrzeugs konfiguriert ist, wenn die Beleuchtungsstärke hinter dem Fahrzeug nicht ausreicht, um einen Zielanzeigebereich (303) zu erhalten, der nicht mit einem Lichtverschmutzungsbereich (302) überlappt, wobei Licht aus dem Lichtverschmutzungsbereich (302) ein Spiegelbild auf einem beifahrerseitigen Fenster erzeugt, wenn der Lichtverschmutzungsbereich (302) beleuchtet wird, und das Spiegelbild die Sicht des Fahrers beim Blicken auf einen beifahrerseitigen Rückspiegels verdeckt.

11. Bildschirmsteuervorrichtung (700) für ein Fahrzeug, die Folgendes umfasst:

ein Erfassungsmodul (710), das zum Erfassen der Beleuchtungsstärke im Inneren des Fahrzeugs konfiguriert ist; **gekennzeichnet durch**:

ein Feststellungsmodul (720), das zum Feststellen konfiguriert ist, ob die Beleuchtungsstärke hinter dem Fahrzeug innerhalb einer voreingestellten Zeitspanne ausreichend ist, wenn die Beleuchtungsstärke im Inneren des Fahrzeugs niedriger als eine Schwellenbeleuchtungsstärke ist; und ein Lichtverschmutzungsschutzmodul (730), das zum Anzeigen von von einer Heckkamera aufgenommenen Bildern auf einem zentralen Steueranzeigeschirm konfiguriert ist, wenn die Beleuchtungsstärke hinter dem Fahrzeug unzureichend ist.

12. Fahrzeuginterner Bildschirm (800), der Folgendes umfasst:

einen oder mehrere Prozessoren (810); Speicher (820); und ein oder mehrere in dem Speicher (820) gespeicherte Programme, konfiguriert zur Ausführung durch die ein oder mehreren Prozessoren (810), um das Verfahren nach einem der Ansprüche 1 bis 7 durchzuführen.

13. Computerlesbares Speichermedium (1000), das einen darauf gespeicherten Programmcode umfasst, der bei Ausführung durch einen Prozessor zur Durchführung des Verfahrens nach einem der Ansprüche 1 bis 7 führt.

14. Fahrzeug (900), das eine Fahrzeugkarosserie (910), eine Fahrzeugsteuereinheit (920) und den in der Fahrzeugkarosserie angeordneten fahrzeuginternen Bildschirm (800) nach Anspruch 12 umfasst, wobei die Fahrzeugsteuereinheit mit dem fahrzeuginternen Bildschirm verbunden ist.

**Revendications**

1. Un procédé de commande d'écran pour un véhicule, comprenant :

l'acquisition (S 110) d'une intensité lumineuse à l'intérieur du véhicule, **caractérisé par** :

la détermination (S120) si l'intensité lumineuse à l'arrière du véhicule est suffisante à l'intérieur d'une période temporelle prédéfinie lorsque l'intensité lumineuse à l'intérieur du véhicule est inférieure à une intensité lumineuse seuil, et la réduction (S 130) d'une influence d'un écran d'affichage de passager avant du véhicule sur une vue de conducteur d'un rétroviseur côté passager si l'intensité lumineuse à l'arrière du véhicule est insuffisante.

2. Le procédé selon la Revendication 1, où ladite réduction (S 130) de l'influence de l'écran d'affichage de passager avant du véhicule sur la vue de conducteur du rétroviseur côté passager si l'intensité lumineuse à l'arrière du véhicule est insuffisante comprend : l'abaissement (S230) de la luminosité de l'écran d'affichage de passager avant.

3. Le procédé selon la Revendication 1 ou 2, comprenant en outre, avant ladite réduction (S130) de l'influence de l'écran d'affichage de passager avant du véhicule sur la vue de conducteur du rétroviseur côté passager :

l'acquisition d'une carte de vision du conducteur si l'intensité lumineuse à l'arrière du véhicule est insuffisante, l'analyse de la carte de vision du conducteur de façon à obtenir un résultat d'analyse de vision, et la détermination si le conducteur observe le rétroviseur côté passager en fonction du résultat d'analyse de vision, et la réduction de l'influence de l'écran d'affichage de passager avant du véhicule sur la vue de conducteur du rétroviseur côté passager si le conducteur observe le rétroviseur côté passager.

4. Un procédé de commande d'écran pour un véhicule, comprenant :

l'acquisition (S310) d'une intensité lumineuse à l'intérieur du véhicule, **caractérisé par** :

la détermination (S320) si une intensité lumineuse à l'arrière du véhicule est suffisante à l'intérieur d'une période temporelle prédéfinie lorsque l'intensité lumineuse à l'intérieur du véhicule est inférieure à une intensité lumineuse seuil, et la réduction (S330) d'une zone d'affichage d'un écran d'affichage de passager avant du véhicule si l'intensité lumineuse à l'arrière du véhicule est insuffisante de façon à obtenir une zone d'affichage cible (303) sans chevauchement avec une zone de pollution lumineuse (302), où la lumière provenant de la zone de pollution lumineuse (302) produit une image miroir sur une vitre côté passager lorsque la zone de pollution lumineuse (302) est éclairée, et l'image miroir obscurcit la vision du conducteur lorsqu'il observe un rétroviseur côté passager.

5. Le procédé selon la Revendication 4, où ladite réduction (S330) d'une zone d'affichage de l'écran d'affichage de passager avant si l'intensité lumineuse à l'arrière du véhicule est insuffisante pour obtenir une zone d'affichage cible (303) comprend :

 la détermination (S331) d'un rapport longueur sur largeur de la zone d'affichage sur l'écran, la réduction (S332) de la zone d'affichage de l'écran d'affichage de passager avant en fonction du rapport longueur sur largeur de façon à obtenir la zone d'affichage cible, où un point de fixation gauche supérieur de la zone d'affichage cible chevauche un point de fixation gauche supérieur d'une zone d'affichage d'origine (301) de l'écran d'affichage de passager avant, et un point de fixation droit inférieur de la zone d'affichage cible se situe à une limite de la zone de pollution lumineuse (302) sur le côté droit de la zone d'affichage d'origine (301).

6. Le procédé selon la Revendication 5, où la zone de pollution lumineuse (302) est triangulaire, et la longueur et la largeur de la zone d'affichage cible sont calculées par les formules suivantes :

$$A = a - b1(b/a + b1/a1), \quad B = b - b(b/b1 + a/a1),$$

où A représente la longueur de la zone d'affichage cible, B représente la largeur de la zone d'affichage cible, a représente la longueur de la zone d'affichage d'origine (301), b représente la largeur de la zone d'affichage d'origine (301), et a1 et b1 représentent la longueur de deux côtés de la zone de pollution lumineuse (302) respectivement.

7. Un procédé de commande d'écran pour un véhicule comprenant un écran d'affichage de commande central et une caméra de recul, comprenant :

 l'acquisition (S410) d'une intensité lumineuse à l'intérieur du véhicule,
 **caractérisé par** :

 la détermination (S420) si une intensité lumineuse à l'arrière du véhicule est suffisante à l'intérieur d'une période temporelle prédéfinie lorsque l'intensité lumineuse à l'intérieur du véhicule est inférieure à une intensité lumineuse seuil, et
l'affichage (S430) d'images capturées par la caméra de recul sur l'écran d'affichage de commande central si l'intensité lumineuse à l'arrière du véhicule est insuffisante.

8. Le procédé selon la Revendication 7, où ladite détermination (S420) si l'intensité lumineuse à l'arrière du véhicule est suffisante à l'intérieur d'une période temporelle prédéfinie comprend :

 la capture (S421) d'images ambiantes à l'intérieur d'une période temporelle prédéfinie par la caméra de recul, où les images ambiantes sont des images ambiantes à l'arrière du véhicule, et l'acquisition (S422) de la résolution des images ambiantes, et la détermination, en fonction de la résolution, si l'intensité lumineuse à l'arrière du véhicule est suffisante.

9. Un appareil de commande d'écran (500) pour un véhicule, comprenant :

 un module d'acquisition (510), configuré de façon à acquérir une intensité lumineuse à l'intérieur du véhicule,
 **caractérisé par** :

  un module de détermination (520), configuré de façon à déterminer si une intensité lumineuse à l'arrière du véhicule est suffisante à l'intérieur d'une période temporelle prédéfinie lorsque l'intensité lumineuse à l'intérieur du véhicule est inférieure à une intensité lumineuse seuil, et
  un module de protection contre la pollution lumineuse (530), configuré de façon à réduire l'influence d'un écran d'affichage de passager avant du véhicule sur une vue de conducteur d'un rétroviseur côté passager si l'intensité lumineuse à l'arrière du véhicule est insuffisante.

10. Un appareil de commande d'écran (600) pour un véhicule, comprenant :

 un module d'acquisition (610), configuré de façon à acquérir une intensité lumineuse à l'intérieur du véhicule,
 **caractérisé par** :

  un module de détermination (620), configuré de façon à déterminer si une intensité lumineuse à l'arrière du véhicule est suffisante à l'intérieur d'une période temporelle prédéfinie lorsque l'intensité lumineuse à l'intérieur du véhicule est inférieure à une intensité lumineuse seuil, et

un module de protection contre la pollution lumineuse (630), configuré de façon à réduire une zone d'affichage de l'écran d'affichage de passager avant du véhicule si l'intensité lumineuse à l'arrière du véhicule est insuffisante de façon à obtenir une zone d'affichage cible (303) sans chevauchement avec une zone de pollution lumineuse (302), où la lumière provenant de la zone de pollution lumineuse (302) produit une image miroir sur une vitre côté passager lorsque la zone de pollution lumineuse (302) est éclairée, et l'image miroir obscurcit la vision du conducteur qui observe un rétroviseur côté passager.

11. Un appareil de commande d'écran (700) pour un véhicule, comprenant :

un module d'acquisition (710), configuré de façon à acquérir une intensité lumineuse à l'intérieur du véhicule,
**caractérisé par** :

un module de détermination (720), configuré de façon à déterminer si une intensité lumineuse à l'arrière du véhicule est suffisante à l'intérieur d'une période temporelle prédéfinie lorsque l'intensité lumineuse à l'intérieur du véhicule est inférieure à une intensité lumineuse seuil, et
un module de protection contre la pollution lumineuse (730), configuré de façon à afficher des images capturées par une caméra de recul sur un écran d'affichage de commande central si l'intensité lumineuse à l'arrière du véhicule est insuffisante.

12. Un écran embarqué dans un véhicule (800), comprenant :

un ou plusieurs processeurs (810),
une mémoire (820), et
un ou plusieurs programmes conservés en mémoire dans la mémoire (820) configurés de façon à être exécutés par les un ou plusieurs processeurs (810) de façon à exécuter le procédé selon l'une quelconque des Revendications 1 à 7.

13. Un support à mémoire lisible par ordinateur (1000), contenant du code de programme conservé en mémoire sur celui-ci qui, lorsqu'il est exécuté par un processeur, résulte en l'exécution du procédé selon l'une quelconque des Revendications 1 à 7.

14. Un véhicule (900), comprenant un corps de véhicule (910), une unité de commande de véhicule (920) et l'écran embarqué dans un véhicule (800) selon la Revendication 12 agencé dans le corps de véhicule, où l'unité de commande de véhicule est raccordé à l'écran embarqué dans un véhicule.

Acquiring an illumination intensity inside the vehicle ⌐ S110

Determining whether illumination behind the vehicle is sufficient within a preset time period when the illumination intensity is lower than a threshold illumination intensity ⌐ S120

Yes

No

Reducing influence of a front passenger display screen of the vehicle on the driver's view of a passenger-side rearview mirror if illumination behind the vehicle is insufficient ⌐ S130

FIG. 1

Acquiring an illumination intensity inside the vehicle ⌐ S210

Determining whether illumination behind the vehicle is sufficient within a preset time period when the illumination intensity is lower than a threshold illumination intensity ⌐ S220

Yes

No

Lowering the brightness of the front passenger display screen if illumination behind the vehicle is insufficient ⌐ S230

FIG. 2

Acquiring an illumination intensity inside the vehicle — S310

Determining whether illumination behind the vehicle is sufficient within a preset time period when the illumination intensity is lower than a threshold illumination intensity — S320

Yes

No

Reducing a display area of a front passenger display screen of the vehicle if illumination behind the vehicle is insufficient to obtain a target display area not overlapping with a light pollution area — S330

FIG. 3

303    301

B

302

b

b1

A

a    a1

FIG. 4

Determining a length-to-width ratio of the screen display area — S331

Reducing the display area of the front passenger display screen according to the length-to-width ratio to obtain the target display area — S332

FIG. 5

Acquiring an illumination intensity inside the vehicle — S410

Yes

Determining whether illumination behind the vehicle is sufficient within a preset time period when the illumination intensity is lower than a threshold illumination intensity — S420

No

Displaying images captured by the rear camera on the central control display screen if illumination behind the vehicle is insufficient — S430

FIG. 6

Capturing ambient images within a preset time period by a rear camera, wherein the ambient images are ambient images behind the vehicle — S421

Acquiring resolution of the ambient images, and determining, based on the resolution, whether illumination behind the vehicle is sufficient — S422

FIG. 7

Apparatus
500

First acquisition module
510

First determination module
520

First light pollution protection module
530

FIG. 8

Apparatus
600

Second acquisition module
610

Second determination module
620

Second light pollution protection module
630

FIG. 9

Apparatus
700

Third acquisition module
710

Third determination module
720

Third light pollution protection module
730

FIG. 10

800

Processor

810

Memory

820

FIG. 11

FIG. 12

Computer-readable storage medium 1000

1010

Program code for performing steps according to the
method embodiments of the present application

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017349098 A1
- US 8908039 B2
- DE 102018000151 A1